# EUROPÄISCHE PATENTSCHRIFT

(11) **EP 0 672 391 B1**
(45) Veröffentlichungstag und Bekanntmachung des Hinweises auf die Patenterteilung: **11.07.2001**
(21) Anmeldenummer: 95103657.3
(22) Anmeldetag: 14.03.1995
(51) Int. Cl.: A61C 8/00, A61C 3/00

(54) **Vorrichtung zum Befestigen eines dentalen Inserts an einem Implantat**
Fastening device between a dental insert and an implant
Dispositif de fixation entre un insert dentaire et un implant

(30) Priorität: 15.03.1994 DE 4408781
(43) Veröffentlichungstag der Anmeldung: 20.09.1995
(73) Patentinhaber: Stemmann, Hartmut, D-22529 Hamburg (DE)
(72) Erfinder: Stemmann, Hartmut, D-22529 Hamburg (DE)
(74) Vertreter: Klingseisen, Franz, Dipl.-Ing.

(56) Entgegenhaltungen:
- DE-U- 9 207 951
- DE-U- 9 306 146
- US-A- 3 690 005
- US-A- 4 997 372

## Beschreibung

Die Erfindung betrifft eine Vorrichtung nach dem Oberbegriff des Anspruchs 1.

Aus DE-U 93 06 146 ist eine Vorrichtung zur Einführung eines Implantatpfeilers in ein Schraubenimplantat bekannt, wobei ein rohrförmiger Körper, der an seinem einen Ende einen achtkantförmigen Innenwandabschnitt aufweist, auf einen Implantatpfeiler aufgesetzt wird, der einen in dem Schraubenimplantat einzuführenden kegelstumpfförmigen Abschnitt, einen aus dem Schraubenimplantat nach der Einführung herausragenden, für die Befestigung des Kunstzahnes bestimmten Abschnitt und zwischen diesen beiden Abschnitten einen achtkantförmigen Aussenwandbereich aufweist, der zu dem achtkantförmigen Innenwandabschnitt des rohrförmigen Körpers paßt, so daß beim Überschieben des rohrförmigen Körpers über den Implantatpfeiler der achtkantförmige Aussenwandbereich des Implantatpfeilers von dem achtkantförmigen Innenwandabschnitt des rohrförmigen Körpers aufgenommen und lösbar fixiert wird.

Bei der Implantologie im und am Kopf, Schädel, Gesichts-, Mund- und Rachenbereich muß ein Insert an einem Implantat befestigt werden, wobei das operative Feld infolge der chirurgischen Maßnahmen bei Implantationen blutig und feucht ist und die Übersicht beim Einsetzen eines Inserts dadurch sehr erschwert wird.

Der Erfindung liegt die Aufgabe zugrunde, eine Vorrichtung zum Befestigen eines Inserts an einem Implantat zur Verfügung zu stellen, mittels der Inserts sicher und sehr fest an einem Implantat befestigt werden können.

Diese Aufgabe wird erfindungsgemäß durch die Merkmale im kennzeichnenden Teil des Anspruchs 1 gelöst. Dadurch, daß bei einem zylindrischen Insert, in dessen Hülle eine Magnetzelle oder ein ferromagnetisches Teil gasdicht eingeschlossen ist, über den Umfang des Inserts verteilt Abflachungen derart vorgesehen werden, daß zwischen den Abflachungen Abschnitte mit der vollen Wandstärke der Inserthülle verbleiben, kann ein Applikatorelement formschlüssig mit diesem Insert in Eingriff gebracht werden, das einen den Abflachungen entsprechend geformten Eingriffsabschnitt und eine Magnetzelle bzw ein ferromagnetisches Teil aufweist, das eine kraftschlüssige Verbindung zwischen Insert und Applikatorelement gewährleistet.

Auf diese Weise kann ein Insert sicher und sehr fest in ein Implantat eingeschraubt werden. Durch die Magnethalterung kann das in der Regel sehr kleine Insert auch nicht bei ruckartigen Bewegungen aus dem Applikatorelement herausfallen und gegebenenfalls durch die Atmung aspiriert werden, wenn das Insert im Rachenbereich eingesetzt wird. Sobald das Insert auf dem Implantatkopf sicher aufgesetzt ist, kann es beispielsweise mit einer bekannten chirurgischen Ratsche fest eingeschraubt werden.

Beispielsweise Ausführungsformen der Erfindung werden nachfolgend anhand der Zeichnung näher erläutert. Es zeigen:
- Fig. 1: ein Applikatorelement mit Insert, und
- Fig. 2: eine andere Ausführungsform des Applikatorelementes, teilweise im Schnitt.

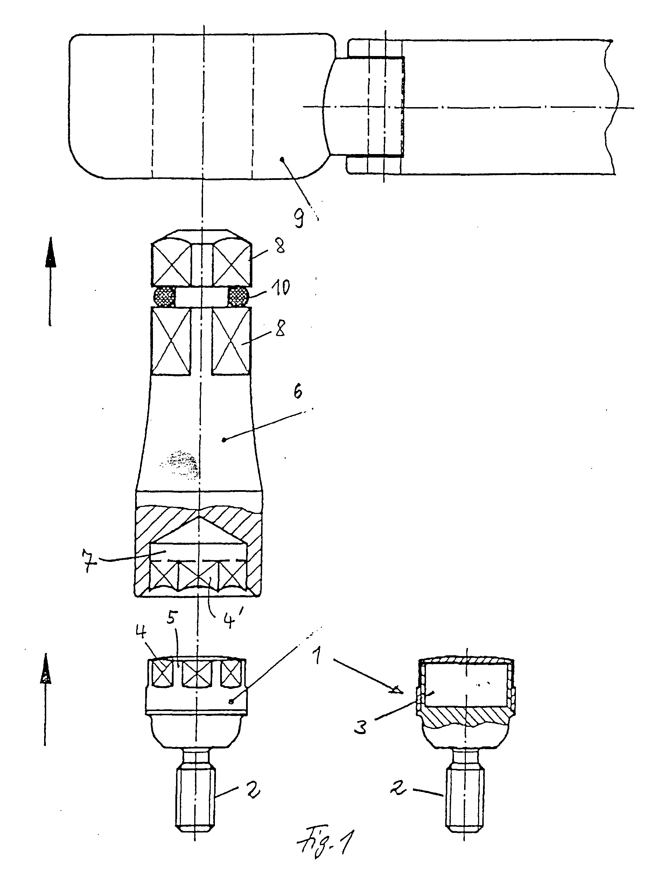

In Fig. 1 ist mit 1 ein Insert bezeichnet, das mit einem Gewindeschaft 2 versehen ist, mittels dem das Insert in ein nicht dargestelltes Implantat bzw. einen Implantatkopf eingeschraubt wird. Auf der Unterseite ist das Implantat 1 becherförmig gestaltet, wobei der untere Rand ausgehend von einer planen Bodenfläche abgerundet oder abgeschrägt ist. Auf dem becherförmigen Unterteil ist ein zylindrischer Abschnitt angeordnet, in dem eine Magnetzelle 3 angeordnet ist. Die Magnetzelle 3 ist von einer dünnen Hülle des Inserts umschlossen, die zum Teil nur 0,05 mm dünn sein kann und aus Reintitan besteht. Auf dem Außenumfang des oberen Randes dieses zylindrischen Abschnitts ist das Insert 1 bei diesem Ausführungsbeispiel mit insgesamt acht Abflachungen 4 versehen, die einen Abstand voneinander haben, so daß ein schmaler Abschnitt 5 der ursprünglichen Außenfläche der im übrigen zylindrischen Hülle des Inserts verbleibt. An diesen schmalen Abschnitten 5 liegt die ursprüngliche Wandstärke der Hülle des Inserts vor, während an den Abflachungen 4 die Wandstärke verringert ist.

Durch die Abschnitte 5 zwischen den Abflachungen 4 werden säulenförmige Abschnitte mit voller Wandstärke gebildet, die die Aufnahme des Kaudrucks am Insert 1 gewährleisten, ohne daß dieses verformt wird. Diese säulenförmigen Abschnitte 5 gewährleisten auch, daß beim Eindrehen des Inserts in das Implantat, bei dem ein Drehmoment bis 30 Ncm mittels einer Ratsche aufgewendet wird, die Hülle des Inserts nicht deformiert wird. Beim Festdrehen des Inserts im Implantat wird das Insert fest angezogen, damit der Spalt zwischen der planen Bodenfläche des Inserts und der entsprechend planen Oberseite des Implantats möglichst dicht geschlossen wird, um das Eindringen von Bakterien in den Gewindebereich zu verhindern.

Die Magnetzelle 3 ist gasdicht in das Insert 1 eingeschweißt, beispielsweise durch Laserschweißung, um eine Korrosion der Magnetzelle zu verhindern, nachdem Magnetlegierungen, wie auch ferromagnetische Legierungen, sehr korrosionsanfällig sind. Bei Deformation der Inserthülle könnten Haarriße auftreten, die den Korrosionsprozeß einleiten würden mit der Folge, daß die Korrosionsprodukte ionisiert in das Gewebe, z.B. in Gingiva und Knochen, eindringen würden. Hierdurch ginge das aus Titan bestehende Implantat verloren.

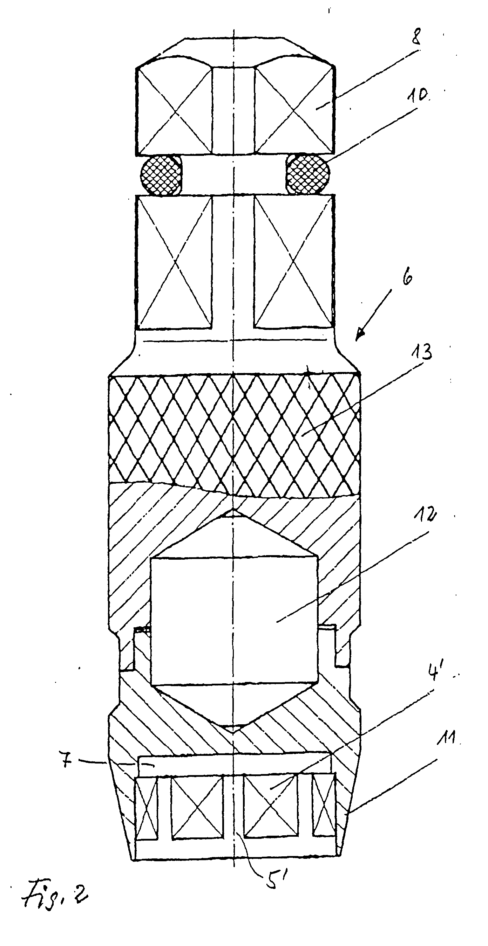

Mit 6 ist ein etwa zylinderförmiges Applikatorelement bezeichnet, das an der unteren Stirnseite eine Ausnehmung 7 aufweist, auf deren Innenumfang Abflachungen 4' entsprechend den Abflachungen 4 am Insert 1 ausgebildet sind. Hierbei können die Abflachungen 4' unmittelbar aneinander grenzen und entsprechend breiter ausgebildet sein als die Abflachungen 4 am Insert, indem die einzelne Abflachung 4' bis zur Schnittlinie mit der benachbarten Abflachung verlängert wird. Jedoch muß die Passung zwischen Eingriffsabschnitt des Inserts 1 und des Applikatorelements 6 auf den Hundertstel-Millimeter genau sein, um eine gute Formschlüssigkeit zwischen den beiden Eingriffsabschnitten zu erreichen. Am oberen Ende ist das Applikatorelement 6 mit vier Abflachungen 8 auf dem Außenumfang versehen, die als Eingriffsflächen für einen Steckschlüssel bzw. eine Drehmomentratsche 9 dienen. Bei dem dargestellten Ausführungsbeispiel sind die Abflachungen 8 durch eine Ringnut unterteilt, in der ein O-Ring 10 angeordnet ist, der im Bereich der Abflachungen 8 etwas nach außen vorsteht und für einen besseren Sitz des Werkzeugs 9 am Eingriffsabschnitt des Applikatorelementes 6 dient. In dem Applikatorelement 6 ist ein Magnet oder ein Teil aus einer ferromagnetischen Legierung eingeschlossen, wie dies anhand der Fig. 2 beschrieben wird.

Fig. 2 zeigt teilweise im Schnitt eine andere Ausführungsform des Applikatorelementes 6, wobei der untere, die Ausnehmung 7 umgebende Rand 11 im Querschnitt keilförmig schlank ausgebildet und schmal auslaufend gestaltet ist, damit beim Eindrehen des Inserts mittels des Applikatorelementes die Gingiva sanft verdrängt und nicht traumatisiert wird. Dies ist bei subkutaner Insert-Applikation besonders wichtig. Auch kann das spitzauslaufende Ende des Applikatorelementes in den Spalt zwischen Implantat und Knochenaufbau beim Festziehen des Inserts etwas eindringen, ohne daß das Applikatorelement beim Festziehen von dem Insert abgehoben wird.

Die Ausnehmung 7 weist bei dieser Ausführungsform eine plane Bodenfläche auf, die als Anschlag für das Insert dient, und die Abflachungen 4' sind derart in einem Abstand voneinander angeordnet, daß sich dazwischen Abstände 5' ergeben, entsprechend der Ausgestaltung am Insert 1 in Fig. 1.

Das Applikatorelement 6 ist zweiteilig ausgebildet zur Aufnahme einer ferromagnetischen Zelle 12, die durch Laserschweißung korrosionsstabil in den Titanmantel des Applikatorelementes eingebettet ist. Die ferromagnetische Zelle 12 wird aktiviert, sobald ein Insert 1 in die Ausnehmung des Applikatorelementes gesteckt wird. Während des gesamten Behandlungsablaufs wird eine sichere Magnetverbindung hergestellt.

Auf dem Außenumfang des Mittelabschnittes 13 ist das Applikatorelement 6 mit einer Rändelung versehen, damit das Insert auch bei Mundfeuchtigkeit auf dem Applikatorelement zuverlässig von Hand eingedreht werden kann.

Das Applikatorelement 6 ist wie die anderen Teile aus Reintitan gefertigt, um eine Fremdmetallkontamination am Insert 1 und in der Implantatumgebung zu vermeiden. Der O-Ring 10 kann aus Silikon oder einem anderen im Medizinbereich zugelassenen Material bestehen. Er verhindert ein Auseinandergleiten zwischen Werkzeug und Applikatorelement während der Behandlung.

Bei der Behandlung wird das Insert 1 in das Applikatorelement 6 eingesetzt, wobei die Abflachungen an den beiden Teilen ineinander greifen. Die Magnetwirkung zieht das Insert paßgenau bis zum Bodenanschlag ein, worauf Insert und Applikatorelement wie ein Teil zu handhaben sind.

Das freigelegte Implantatkopfteil und die umgebende Gingiva werden sorgfältig gereinigt, desinfiziert und trockengelegt, worauf das Insert mit dem Applikatorelement von Hand eingedreht wird, bis ein leichtes Aufsitzen auf dem Implantatkopf spürbar ist. Hierauf wird das Eindrehinstrument 9 auf das Applikatorelement 6 aufgesteckt und der Eindrehvorgang bis zum Auslösen der Drehmomentsperre fortgesetzt. Sobald das Insert fest mit dem Implantat verbunden ist, kann das Applikatorelement 6 ohne weiteres abgezogen werden.

Bei einer abgewandelten Ausführungsform kann das oberhalb des O-Ringes liegende Eingriffsteil lösbar mit dem Applikatorelement 6 verbunden sein, damit verschiedene Mitnehmerelemente für verschiedene Werkzeuge am Applikatorelement 6 angebracht werden können. Hierbei kann auch ein handelsübliches Gerät zum motorischen Eindrehen des Inserts verwendet werden.

Es kann auch auf der oberen Stirnseite des Applikatorelementes eine Vertiefung für den Eingriff eines Imbus-Schlüssels ausgebildet sein.

Im Insert 1 kann anstelle einer Magnetzelle auch eine ferromagnetische Legierung vorgesehen werden, die ebenfalls gasdicht eingeschweißt ist und mit einer Magnetzelle im Applikatorelement 6 zusammenwirkt.

Anstelle der acht Abflachungen auf dem Umfang des Inserts kann auch eine geringere Anzahl von Abflachungen vorgesehen werden. Auch können die Abflachungen 4 an einem tiefer liegenden Abschnitt des Umfangs des Inserts ausgebildet sein.

## Patentansprüche

1. Vorrichtung zum Befestigen eines Inserts (1) an einem Implantat, insbesondere für die Zahnprothetik, sowie Insert, wobei Abflachungen (4) auf dem Umfang des Inserts für den formschlüssigen Eingriff eines aufsteckbaren Elementes vorgesehen sind, das einen entsprechenden Eingriffsabschnitt aufweist,
dadurch gekennzeichnet,
daß eine Magnetzelle (3) oder ein ferromagnetisches Teil in eine Inserthülle gasdicht eingeschlossen ist und über den Umfang der Inserthülle die Abflachungen (4) derart verteilt vorgesehen sind, daß zwischen den Abflachungen (4) Abschnitte (5) mit der vollen Wandstärke der Inserthülle verbleiben, wobei ein Eingriffsabschnitt (4') eines Applikatorelementes (6) mit den Abflachungen (4) zum Einschrauben des Inserts in ein Implantat formschlüssig in Eingriff treten kann und das Applikatorelement (6) magnetisch ausgebildet ist.

2. Vorrichtung nach Anspruch 1, wobei
die Abflachungen (4) angrenzend an den oberen Rand des Inserts (1) ausgebildet sind.

3. Vorrichtung nach Anspruch 1,
wobei das Applikatorelement (6) am einen Ende den Eingriffsabschnitt (4') für den formschlüssigen Eingriff mit den Abflachungen (4) am Insert und am gegenüberliegenden Ende einen Eingriffsabschnitt (8) für ein Werkzeug aufweist, wobei in dem Applikatorelement (6) für einen kraftschlüssigen Eingriff mit dem Insert (1) eine Magnetzelle (12) oder ein ferromagnetisches Teil eingeschlossen ist.

4. Vorrichtung nach Anspruch 3, wobei
der Eingriffsabschnitt (4') am Applikatorelement (6) von einem zum freien Ende hin sich verjüngenden Rand (11) umgeben ist.

5. Vorrichtung nach Anspruch 3, wobei
auf dem Außenumfang des Applikatorelementes (6) ein gerändelter Abschnitt (13) ausgebildet ist.

6. Vorrichtung nach Anspruch 3, wobei
der Eingriffsabschnitt (8) für den Eingriff eines Werkzeugs am Applikatorelement (6) durch Abflachungen auf dem Außenumfang ausgebildet ist.

7. Vorrichtung nach Anspruch 6, wobei
der Eingriffsabschnitt durch eine Ringnut unterteilt ist, in der ein O-Ring (10) angeordnet ist.

8. Vorrichtung nach Anspruch 3, wobei
zumindest ein Teil des für den Eingriff eines Werkzeugs vorgesehenen Eingriffsabschnitts (8) am Applikatorelement (6) lösbar mit diesem verbunden ist.

9. Vorrichtung nach Anspruch 3, wobei
das Applikatorelement (6) aus Reintitan gefertigt ist.

10. Vorrichtung nach Anspruch 3, wobei
die Magnetzelle (12) oder das ferromagnetische Teil gasdicht in dem Applikatorelement (6) eingeschlossen ist.

## Claims

1. An apparatus for mounting an insert (1) on an implant, especially for dental protheses, as well as an insert, wherein flat portions (4) are provided on the circumference of the insert for the positive engagement of an insertable member having a corresponding engagement portion,
characterized in that
a magnetic cell (3) or a ferromagnetic member is sealed gas-proof into an insert jacket and the flat portions (4) are provided spreaded over the circumference of the insert jacket such that between the flat portions (4) portions (5) remain with the full wall thickness of the insert jacket, wherein an engagement portion (4') of an applicator member (6) can engage positively with the flat portions (4) for screwing the insert into an implant and the applicator member (6) is designed magnetically.

2. Apparatus according to claim 1,
wherein the flat portions (4) are designed adjacent to the upper edge of the insert (1).

3. Apparatus according to claim 1,
wherein the applicator member (6) is provided on one end thereof with the engagement portion (4') for positive engagement with the flat portions (4) on the insert and at the opposite end with an engagement portion (8) for a tool, wherein in the applicator member (6) a magnetic cell (12) or a ferromagnetic member is sealed for positive force engagement with the insert (1).

4. Apparatus according to claim 3, wherein
the engaging portion (4') is surrounded on the applicator member (6) by an edge (11) which is tapered towards the free end.

5. Apparatus according to claim 3, wherein
on the outer circumference of the applicator member (6) an edged portion (13) is designed.

6. Apparatus according to claim 3, wherein
the engaging portion (8) is designed for the engagement of a tool with the applicator member (6) by flat portions on the outer circumference.

7. Apparatus according to claim 6, wherein
the engaging portion is subdivided by an annular groove, in which an O-ring (10) is displaced.

8. Apparatus according to claim 3, wherein
at least part of the engaging portion (8) provided for the engagement of a tool is connected disengageable therewith on the applicator member (6).

9. Apparatus according to claim 3, wherein
the applicator member (6) is made of pure titanium.

10. Apparatus according to claim 3, wherein
the magnetic cell (12) or the ferromagnetic member is sealed gas-proof in the applicator member (6).

## Revendications

1. Dispositif pour la fixation d'un insert (1) sur un implant, en particulier pour une prothèse dentaire, dans lequel des méplats (4) sont prévus à la périphérie de l'insert pour l'engagement à coopération de formes d'un élément susceptible d'être coiffé et qui comprend un tronçon d'engagement correspondant,
caractérisé en ce qu'une cellule magnétique (3) ou une partie ferromagnétique est enfermée dans une douille d'insert, de manière étanche aux gaz, et en ce que les méplats (4) sont prévus de façon répartie sur la périphérie de la douille d'insert de telle manière qu'il reste entre les méplats (4) des tronçons (5) dans lesquels la douille d'insert présente une paroi d'épaisseur totale, et un tronçon d'engagement (4') d'un élément applicateur (6) est susceptible de venir en engagement par coopération de formes avec les méplats (4) pour visser l'insert dans un implant, et en ce que l'élément applicateur (6) est réalisé de façon magnétique.

2. Dispositif selon la revendication 1, dans lequel les méplats (4) sont réalisés de manière adjacente à la bordure supérieure de l'insert (1).

3. Dispositif selon la revendication 1, dans lequel l'élément applicateur (6) comporte à une extrémité ledit tronçon d'engagement (4') pour l'engagement en coopération de formes avec les méplats (4) sur l'insert, et à l'extrémité opposée un tronçon d'engagement (8) pour un outil, et en ce qu'une cellule magnétique (12) ou une partie ferromagnétique est enfermée dans l'élément applicateur (6) pour un engagement en coopération de forces avec l'insert (1).

4. Dispositif selon la revendication, dans lequel le tronçon d'engagement (4') sur l'élément applicateur (6) est entouré par une bordure (11) qui se rétrécit en direction de l'extrémité libre.

5. Dispositif selon la revendication 3, dans lequel un tronçon rabattu (13) est réalisé sur la périphérie extérieure de l'élément applicateur (6).

6. Dispositif selon la revendication 3, dans lequel le tronçon d'engagement (8) pour l'engagement d'un outil sur l'élément applicateur (6) est réalisé par des méplats sur la périphérie extérieure.

7. Dispositif selon la revendication 6, dans lequel le tronçon d'engagement est subdivisé par une gorge annulaire dans laquelle est agencé un joint torique (10).

8. Dispositif selon la revendication 3, dans lequel au moins une partie du tronçon d'engagement (8) prévu sur l'élément applicateur pour l'engagement d'un outil est relié de façon détachable avec l'élément applicateur (6).

9. Dispositif selon la revendication 3, dans lequel l'élément applicateur (6) est fabriqué en titane pur.

10. Dispositif selon la revendication 3, dans lequel la cellule magnétique (12) ou la partie ferromagnétique est enfermée dans l'élément applicateur (6) de façon étanche aux gaz.
